# EUROPEAN PATENT APPLICATION

(11) **EP 3 432 149 A1**
(43) Date of publication of application: **23.01.2019**
(21) Application number: 17182394.1
(22) Date of filing: 20.07.2017
(51) Int. Cl.: G06F 11/36, G06F 11/34

(54) **A COMPUTER-IMPLEMENTED METHOD AND SYSTEM OF COMPILING A MODIFIED SOURCE CODE AT A PLURALITY OF TARGET MACHINES**

(71) Applicant: Fujitsu Limited, Kawasaki-shi, Kanagawa 211-8588 (JP)
(72) Inventor: ALDEA LOPEZ, Sergio, London, W13 9AS (GB)
(74) Representative: Haseltine Lake LLP

(57) **Abstract**

A computer-implemented method of compiling a modified source code at a plurality of target machines connected to a local machine over a network, the method comprising: a local machine using compiler information for each S20 target machine to create combinations of compiler options for each target machine; the local machine sending a code modification to each target machine, along with the compiler option combinations for that target machine; and each target machine receiving the code modification and compiler option combinations and compiling the modified code with each of the compiler option combinations to provide as many executable files as combinations.

## Description

The present invention relates to analysis and improvement of code/software and is applicable in at least High Performance Computing (HPC) environments.

Software (computer code) analysis, such as performance evaluation, optimization, or parallelization tasks for compiled software code can involve time consuming, trial-and-error processes, which are often very tedious, especially in those situations in which software code has to run in different machines and/or hardware architectures.

The present invention refers to machines and computers. The term "machine" is sometimes seen as a more general word, which usually refers to the hardware or form factor, hence encompassing not only what is usually understood under computer (desktops, servers, workstations), but also all sorts of intelligent devices: smartphones, tablets, loT devices, embedded systems, etc. Indeed, these devices are none other than computers with different form factors or specific hardware and all these different machines can be used for implementation of invention embodiments.

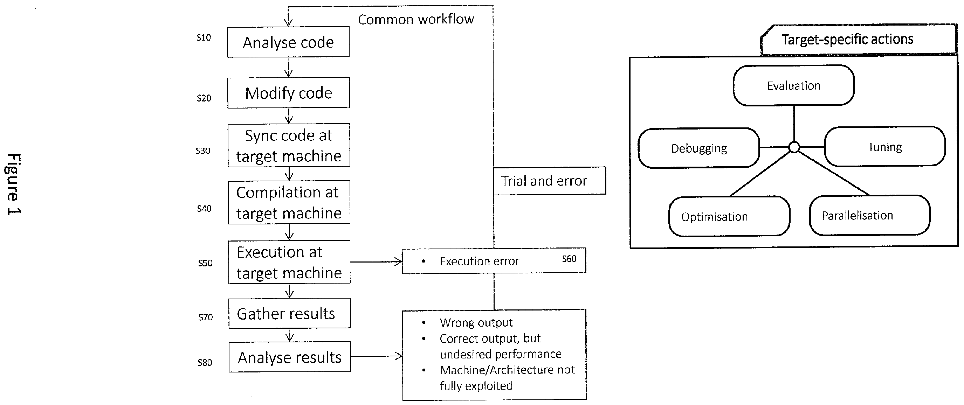

Figure 1 shows the common workflow that a programmer has to follow in order to achieve the mentioned tasks over different machines. In step S10 the program analyses the code and in step S20 the code is modified. After every new modification to the code, the programmer has to send or synchronise the changes from a local machine to the target machines in which the code will be run (S30). Thereafter, it is necessary to compile code for that specific machine in step S40. The specific machine may hold different hardware architecture from the local machine. After step S40 the code is executed at the target machine in step S50 and there may be execution errors detected in step S60. If not, the results are gathered in step S70 and analysed in step S80. The analysis may reveal the wrong output, the correct output but undesired performance, or that the machine/architecture is not fully exploited. This process may be used for the actions of evaluation, debugging, tuning, optimisation and parallelisation as shown in Figure 1. This process is far from being optimised, especially if the programmer has to repeat it for each target machine

Some examples of these tasks are the profiling (dynamic analysis) of a code across different target machines, compiled with different compilers and/or options, and the tuning of a code for different machines, which implies transferring changes in the code to the different target machines.

As a solution to the compilation for different architectures, a special type of compiler, called a "cross compiler", is often used. A cross compiler is capable of creating executable code (or binary code) for a platform different to the one in which the compiler is running. However, cross compiling requires that the libraries at the main machine are compatible with the target machine/architecture, which in many cases means having different instances of the same library configured, and even a second compiler.

According to an embodiment of a first aspect of the invention, there is provided a computer-implemented method of compiling a modified source code at a plurality of target machines connected to a local machine over a network, the method comprising: a local machine using compiler information for each target machine to create combinations of compiler options for each target machine; the local machine sending a code modification to each target machine, along with the compiler option combinations for that target machine; and each target machine receiving the code modification and compiler option combinations and compiling the modified code with each of the compiler option combinations to provide as many executable files as combinations.

Embodiments of the invention allow remote compilation of source modified at a local machine. The remote compilation is at a plurality of target machines and in order to allow the remote compilation, the local machine sends compiler option combinations for each target machine.

Each compiler usually has different "words" for the same options, such as for debugging parameters. Invention embodiments take machines as targets, and the parameters options to send to them depend on the compilers available at each machine. This information is known by the local machine, and provided to the user, in order to create the different combinations, which should be compatible, as set out in more detail hereinafter..

As an example, the same code could be compiled at different machines, with different architectures, but the same compilers, provided that the compiler is able to create code that targets the different architectures. In the case some target machines have different compilers, the options sent to these machines may be different.

Sending and then compiling using multiple compiler options means that the method explores the space available for execution at each target machine and when execution takes place, the best compilation options can be found. Also the performance results of each execution (for example in terms of time taken and/or energy usage) can be saved with the code modification and compiler option combinations for possible use in a different scenario. In particular, this information can be saved in a repository for use in recommending not just future code modifications but also future compiler option combinations for a code modification.

The local machine may send original code (as source code) to each of the target machines. This step is only necessary the first time the process is run for a certain program and thereafter only modifications may be sent. Moreover the original code could be added separately to the target machines rather than being sent from the local machine.

In either case, the local machine may send the code modification as a patch file for the source code describing the modification and each target machine may generate modified code automatically by applying the patch to the original code (at the target machine).

Any suitable mechanism may be provided for checking that the patch has been applied properly and that the required modification has been carried out at each target machine. One method for this purpose comprises: the local machine generating a local machine checksum of the modified code and sending the local machine checksum to the target machines; each target machine generating a target machine checksum of the modified code by applying the patch to the original code to generate the modified code and then comparing the target machine checksum with the local machine checksum; and when the local machine checksum and a target machine checksum differ, the target machine sending a request for the complete modified code to the local machine.

Any compiler options may be used by the local machine to create combinations of compiler options. In general the compiler options will be selected so that they correspond to the available options in the target machines. For example the compiler options may include any of: compiler selection, compilation flags and compiler environment variables.

Besides the choice of library, or where to search for libraries (for example using the variable LIBRARY_PATH), compiler environment variables which could be used are to set temporary directories, control localization parameters such as language, or where to output dependencies detected during the compilation process.

For example, environment variables for the GCC compiler can be found at: https://gcc.gnu.org/onlinedocs/gcc-4.4.2/gcc/Environment-Variables.html.

The compiler options (parameters) are different from execution-time options/parameters, because they are determined before the execution. Actually, for a particular set of compiler-time parameters (compiler, flags, optimisations), there could be multiple sets of execution-time parameters, and these might be executed separately at a target machine to give a better set of data on the particular modification and compiler option combination. The parameters are set and sent from the local machine, which is responsible for generating the different combinations.

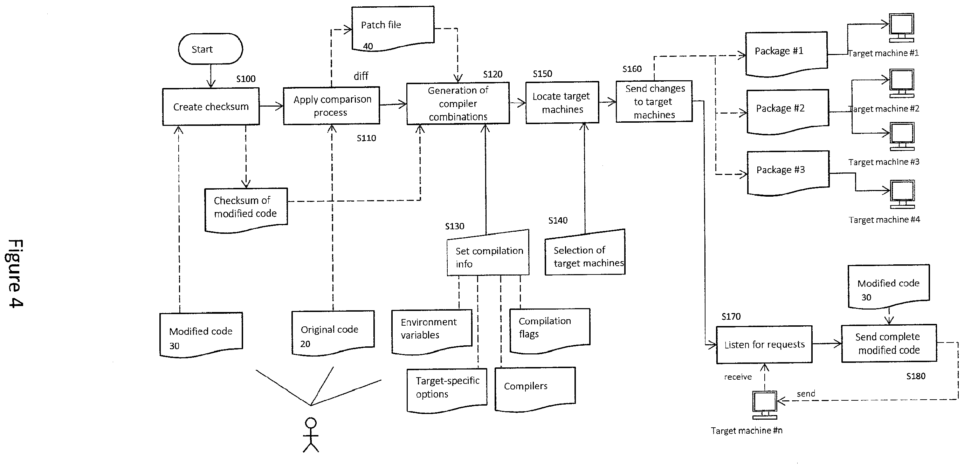

Looking in more detail at the data structure to be sent to the target machines, the local machine may populate three levels of compiler options, formed by compilers, compilation flags and environment variables, remove any invalid options, and then create compiler option combinations in the form of tuples with an entry for each level, each tuple including a compiler, a compilation flag and one or more environment variables. The tuples may be stored in an indexed list and only combinations selected for a target machine may be sent to that target machine. Incidentally, target machines may be selected by the user, as shown in Figure 4. An embodiment could be configured to send the source code to all available machines by default, but the embodiments give users the freedom of selecting to which target machines the code and combinations will be sent.

One of the advantages of invention embodiments is that one or more of the target machines may have a different architecture from the local machine.

The compilation at each target machine may be concurrent, i.e., start at approximately the same time and overlap. This allows an efficient execution across the target machines.

According to an embodiment of a second aspect of the invention, there is provided a computer-implemented method in a local machine triggering compilation of a modified source code at a plurality of target machines connected to the local machine over a network, comprising: using compiler information for each target machine to create combinations of compiler options for each target machine; and sending a code modification to each target machine, along with the compiler option combinations for that target machine.

According to an embodiment of a third aspect of the invention, there is provided a computer-implemented method, in a target machine connected to a local machine over a network, of compiling a modified source code, comprising: sending compiler information to the local machine, allowing the local machine to create combinations of compiler options for the target machine; receiving a code modification from the local machine, along with the compiler option combinations for the target machine; and compiling the modified code with each of the compiler option combinations to provide as many executable files as combinations.

The second and third aspects of the invention relate to methods in the local and target machines and thus may incorporate the preferable features of the method discussed above in the local and target machines respectively.

According to an embodiment of a fourth aspect of the invention there is provided a local machine to trigger compilation of a modified source code at a plurality of target machines connected to the local machine over a network, the local machine comprising a local processor and a local network interface; wherein: the local processor is to use compiler information for each target machine to create combinations of compiler options for each target machine; and the local network interface is to send a code modification to each target machine, along with the compiler option combinations for that target machine.

According to an embodiment of a fifth aspect of the invention there is provided a target machine connected to a local machine over a network, the target machine to compile a modified source code and comprising a compiler and a target network interface; wherein: the target network interface is to send compiler information to the local machine, allowing the local machine to create combinations of compiler options for the target machine; the target network interface is to receive a code modification from the local machine, along with the compiler option combinations for the target machine; and the compiler is to compile the modified code with each of the compiler option combinations to provide as many executable files as combinations.

Thus a computer system may comprise a local machine according to the above definition of the local machine and a plurality of target machines according to the definition of a target machine given above.

The compilation of modified source code at the target machines and process at the local machine of sending the code modification and compiler option combinations to the target machines may be part of a larger method which compares the results on a plurality of target machines of modification of the region of original code.

Hence there may also be provided a computer-implemented method at a local machine for comparing the results on a plurality of target machines connected to the local machine over a network of modification of a region of original code, the method comprising: annotating a region of original code in a program for extraction with a compiler directive; distributing the program to the target machines; allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted; modifying the extracted code and sending the modification to the target machines; re-compilation of the modified extracted code at each target machine according to the second aspect of the invention to generate new executable versions of the extracted code in each target machine for dynamic loading into the instrumented program; receiving from each target machine the results of the target machine executing the instrumented program and dynamically loading and executing the new executable versions of the extracted code; and displaying the results (including performance results) of the target machines to allow determination of the effects of the modification (and different compiler option combinations) on the results (and performance results) from the different target machines.

Furthermore, embodiments relate to the larger method on the target machine and hence to: a computer-implemented method on a target machine connected to a local machine over a network to allow comparison of the results on the target machine of modification of a region of original code with the results of other target machines, the method comprising: receiving a program from the local machine, including a region of original code in the program annotated for extraction with a compiler directive; compiling code including the original code and the compiler directive, and generating executable code in the form of extracted code and instrumented code, wherein the compiler directive causes the annotated region of the original code to be extracted, stored in a separate file, and linked to a function call at a position in the original code from which the extracted region was extracted; receiving a modification of the extracted code and re-compiling the modified extracted code according to the third aspect described above and generating new executable versions of the extracted code for dynamic loading into the instrumented program; executing the instrumented program and dynamically loading and executing the new executable versions of the extracted code and sending the results to the local machine for comparison.

Embodiments also relate to the local machine and the target machine as used in the larger method.

Hence there may be provided a local machine operable to compare the results on a plurality of target machines of modification of a region of original code, the local machine comprising a user interface, a local network interface and a processor, wherein: the user interface is to allow annotation by the user of a region of original code in a program for extraction with a compiler directive; and the local network interface is to distribute the program from the local machine to the target machines allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted; the user interface is to allow user modification of the extracted code; the processor is to use compiler information for each target machine to create combinations of compiler options for each target machine; the local network interface is to send the modification to the target machines, along with the compiler option combinations for that target machine; and to receive the results of execution at each target machine; the user interface is to allow selection of one or more options that are sent to the target machines in the form of a particular invocation of the extracted code, a modification of the starting working set, and a change of the initial dataset of the program; and the user interface is to display the results for comparison by the user.

Furthermore there may be provided a target machine to allow comparison of the results on the target machine of modification of a region of original code with the results of other target machines, the target machine comprising a compiler and a target network interface controlled by a target processor, wherein: the target network interface is to send compiler information to a local machine, allowing the local machine to create combinations of compiler options for the target machine; the target network interface is to receive a program, including annotation by the user of a region of original code in the program for extraction with a compiler directive; the compiler is to compile code including the original code and the compiler directive, to generate executable code in the form of extracted code and instrumented code, to use the compiler directive to cause the annotated region of the original code to be extracted, stored in a separate file, and linked to a function call at a position in the original code from which the extracted region was extracted; the target network interface is to receive a modification of the extracted code from the local machine along with the compiler option combinations for the target machine; the compiler is to re-compile the modified extracted code when triggered by receipt of the modified extracted code with each of the compiler option combinations to generate as many executable files as for dynamic loading into the instrumented program; the target processor is to execute the instrumented program and to dynamically load and execute the new executable versions of the extracted code; and the target network interface is to send the results to the local machine for comparison.

An apparatus or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention may be implemented in digital electronic circuitry, or in computer hardware, firmware, software, or in combinations of them. For example, the target machine may be an loT device such as a sensor, as discussed in more detail hereinafter. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results. Multiple test script versions may be edited and invoked as a unit without using object-oriented programming technology; for example, the elements of a script object may be organized in a structured database or a file system, and the operations described as being performed by the script object may be performed by a test control program.

Elements of the invention have been described using the terms "processor", "interface", "compiler" etc. The skilled person will appreciate that such functional terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will now be described, purely by way of example, with references to the accompanying drawings, in which:-
Figure 1 is a flow chart sharing a common workflow for the evaluation, debugging, tuning, optimisation and parallelisation tasks over a code that has to be run in different machines and/or architectures;
Figure 2a is a flow chart showing an overview of a method in block diagram form;
Figure 2b is a flow chart showing an overview of a more detailed method;
Figure 2c is a flow chart showing an overview of the method in a local machine;
Figure 2d is a flow chart showing an overview of the method in a target machine;
Figure 3a is a block diagram of a system;
Figure 3b is a block diagram of a local machine;
Figure 3c is a block diagram of a target machine;
Figure 4 is a flow chart showing a process at the local machine;
Figure 5 is a flow chart showing a process at each target machine;
Figure 6 is a block diagram with an architecture overview;
Figure 7 is a flow diagram of process flow of the automatic generation of compiler combinations;
Figure 8 shows to the left: compilation options, with three levels of details: compiler, environment variables, and compilation flags; and to the right: selection of target machines, in which for each target machine, different combination of compilation options are selected;
Figure 9 shows to the left: patch file, compilation options, and their different combinations that are sent to the target machines, and to the right: selection of target machines, indicated by IP addresses, and the different combinations of compilation options selected;
Figure 10 shows an example of different compilation options and their combinations (c), which are to be applied to a code (b), and sent to different target machines (d);
Figure 11 is a flow diagram of a process in a system for comparing results on a plurality of target machines;
Figure 12 is a flow chart showing processes in the system of Figure 11 with separation of processes on the local machine and on the target machines; and
Figure 13 is an overview hardware diagram.

The method and system of invention embodiments allows concurrent compilation of code for multiple target machines, with different compiler options, without necessarily having to send the whole code to be compiled remotely. Embodiments take changes to a certain source code, and propagate them to a selection of target machines, which apply these changes and compile the resulting codes using multiple compilation options generated at the local machine.

Embodiments may also distribute multiple compilation options, including compiler selection, different compilation flags and compiler environment variables such as libraries, to several target machines, which receive different combinations of these compilation options, and create as many binary (executable) files as described by the combinations.

Embodiments may be used by any programmer/user, who has to test and/or modify source code under different conditions, including compiler, environment and/or compiler options. Users may accelerate especially their testing and tuning activities, since they may easily measure the impact of their activities under different machines, architectures or compilers. In the process, programmers may gain not only a better understanding of their code behaviour, but they may also gather information on the particularities of each architecture, machine, and compiler.

Embodiments may be implemented as a standalone solution, as a module of a bigger system, such as the one described in P130588EP00, entitled "A Computer-Implemented Method and System for Comparing the Results on a Plurality of Target Machines of Modification of a Region of Original Code", which is filed in parallel herewith, and incorporated by reference. This European patent application discloses a method and system for extracting pieces of code (or code regions) on target machines using a compiler directive added as an annotation at a local machine, and for modifying the extracted code at the target machines remotely using the local machine. Embodiments herein may implement the concurrent compilation, shown in Figures 4, 5 and 8 of P130588EP00. Embodiments may also comprise the overall method/system or the local machine shown in these figures and described in the description. Embodiments may be provided as a module within Cloud Services, in which the user may gain access to and compile code for different target machines.

Embodiments provide a method and system that take changes to a certain source code, and propagate them to a selection of target machines, which automatically apply these changes and compile the resulting codes using multiple compilation options generated at the local machine. These target machines could also consist of different architectures, with different environments, and therefore, embodiments avoid dealing with the configuration of different compilers and libraries at the local machine. Embodiments also provide a method to automatically create and distribute multiple combinations of compiler options (compiler, environment variables, compilation flags, etc.), as well as the allocation of each combination to each target machine, which generates as many binary files as required in the description of all the combinations.

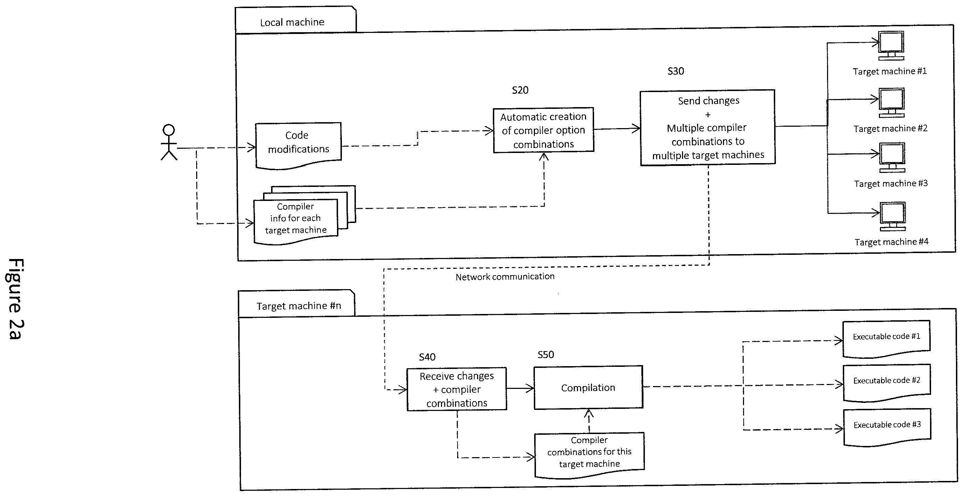

Figure 2a shows an overview of an embodiment. The top of the figure describes the process followed by the local machine. The local machine uses code modifications and compiler information for each target machine. It creates compiler option combinations in step S20 and sends the code modifications and the multiple compiler combinations to multiple target machines in S30. The bottom of the figure describes the process at the target machines, which receive those changes and combinations in S40, apply them to their local copy of the code, and compile it in S50 following the different combinations of compiler information, which may lead to the creation of multiple executable or binary files.

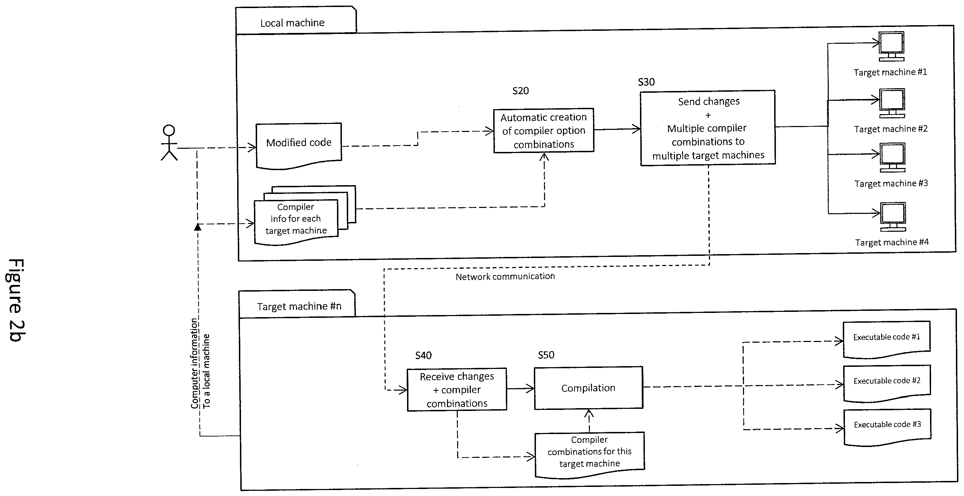

Figure 2b is a slightly more detailed diagram with the same steps and additionally demonstrating that the process may take both the original and the modified code to create a patch file with the set of modifications that need to be propagated to the target machines. This file is wrapped with (put together with) all the different combinations of compile information that needs to be sent to the corresponding target machines. This figure also shows the transfer of compiler information from the target machine #n (thus from all the target machines) to the local machine. Alternatively the information could be set by the administrator when configuring the machines.

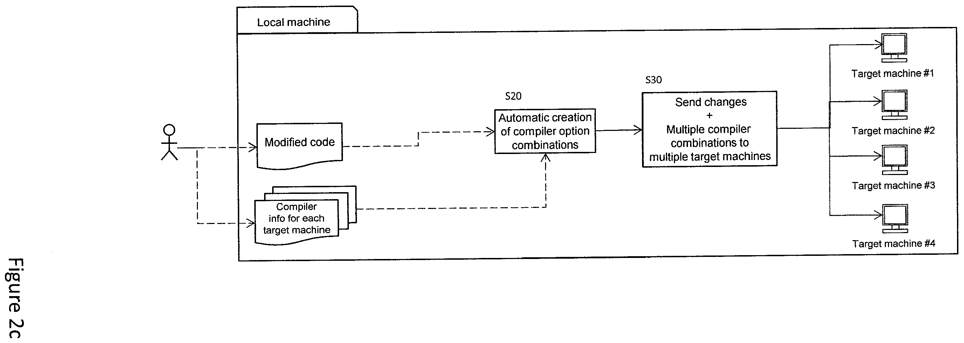

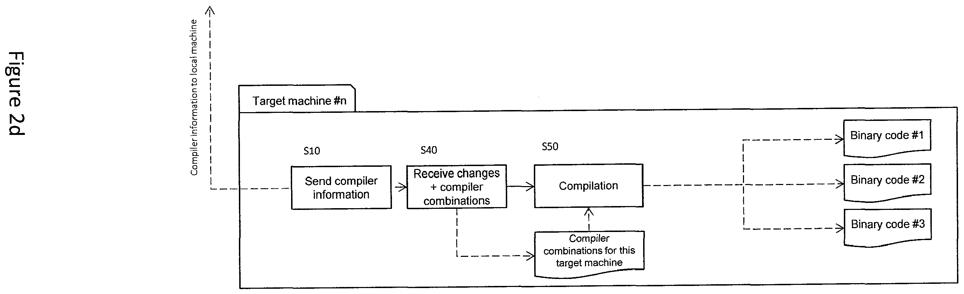

Figures 2c and 2d simply show the processing in the local machine and the target machine respectively, as previously described for Figure 2a. There is no particular limitation to the number of target machines. The range may vary widely, depending on the installation. The connection could only be between computers in a particular cluster, or accessing computers from multiple clusters, or even multiple loT devices at different locations if needed.

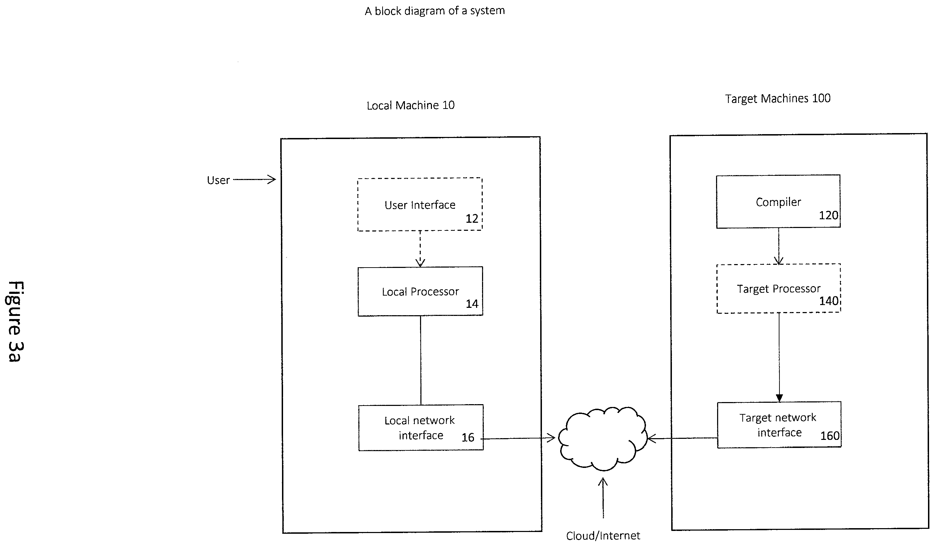

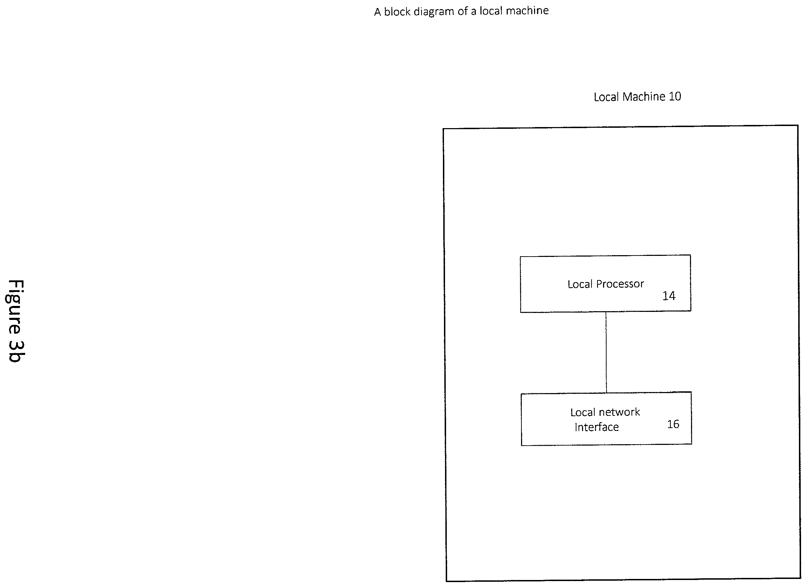

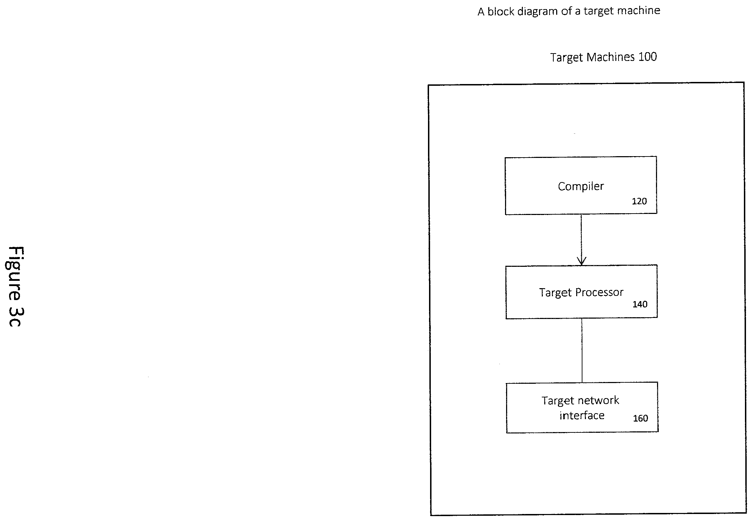

Taking machine in the broadest sense of the word as defined above, invention embodiments may be applied to any intelligent devices, e.g.: smartphones, and devices, sensors etc. with intelligence capability (e.g. in the loT scenario the intelligent fridge, the intelligent curtain closer, remote heat control capability etc.) which could act as the target machines in this context. Thus embodiments encompass a broader interpretation of machines, and are not limited to the more limited sense of a computer as a desktop- or laptop computers or servers, for example.
The method is computer-implemented and Figures 3a, 3b and 3c are block diagrams of an apparatus according to an overall apparatus or system embodiment. Figure 3a shows local machine 10 and target machines 100. The local machine includes a user interface 12 if necessary for user input. It also includes local processor 14 and local network interface 16. The local processor is to use compiler information for each target machine to create combination of compiler options for each target machine. The local network interface sends a code modification for each target machine (which may be selected by the user or all machines may take part in the method by default). The user may also select which combinations are sent to which target machine. Alternatively this can be carried out automatically.

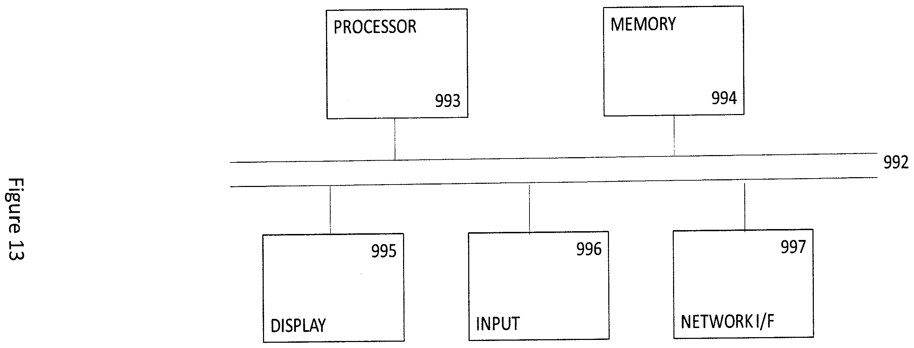

Turning to the target machines, each machine comprises a compiler 120, a target processor 140 and a target network interface 160. The target processor 140 is shown in dashed lines because it is optional (not required for the main steps of the embodiments). The target network interface sends compiler information to the local machine as mentioned above. This information allows the local machine to create combinations of compiler options for the target machine. The target network interface receives the code modification and the compiler option combinations from the local machine and the compiler compiles the modified code with each of the compiler option combinations to provide as many executable files as combinations. If present, the target processor can execute the file. Of course, apparatus 10 and apparatus 20 may have other standard computer components, as shown in Figure 13 which is a more detailed diagram of hardware used to implement an embodiment. Figures 3b and 3c merely reproduce the separate parts in the local machine 10 and target machines 100 and thus further description is not included.

Figure 4 describes the process taking place at the local machine in more detail, and extends the description of Figure 2. Before applying the comparison process to both original and modified code, the checksum of the modified code is calculated in S100. This checksum is later sent to the target machines in order to verify the integrity of the remote codes created using the patch file.

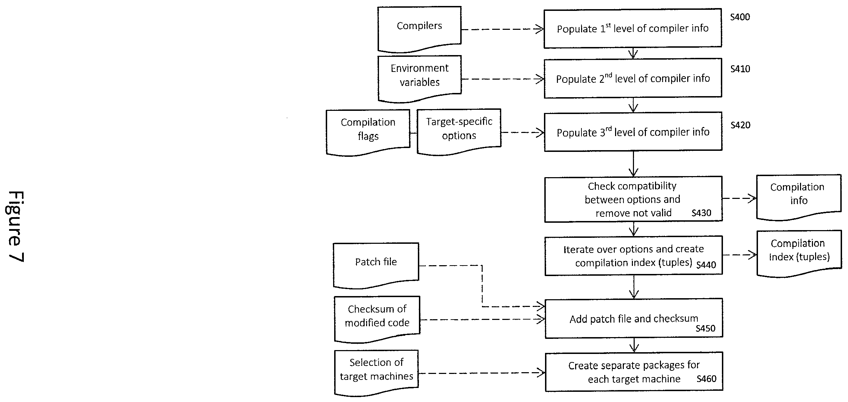

The process continues by obtaining the differences between the original code 20 and the modified code 30, which results in the creation of the patch file 40 in S110. Then the compiler combinatoins are created in S120. This patch file is wrapped together with several items of compilation-time and/or execution-time information, for example compiler information that is set in S130 by the user/programmer, such as the compiler, environment variables, compilation flags, and/or target-specific options. Figure 7 describes how this information is automatically generated and compiled. The user may also select to which target machines this information will be sent in S140. In S150 it is determined which combinations of compiler, environment options, etc. will be sent to each target machine. Subsequently in S160, the modifications (changes) and combinations are sent to the target machines as one package specifically for each machine. Note that all user-based input may be produced before the system starts its execution, and therefore, given such an input, the system may run autonomously, without requiring user intervention.

Once the packages of patch files and compiler-time and exeuction-time information are sent, the local machine keeps listening to the target machines in S170 for requests for the complete modified code, in case the checksum generated remotely is not the same as the local one. In this case, the local machine sends the complete file of the modified source code to the target machine that has requested it in S180.

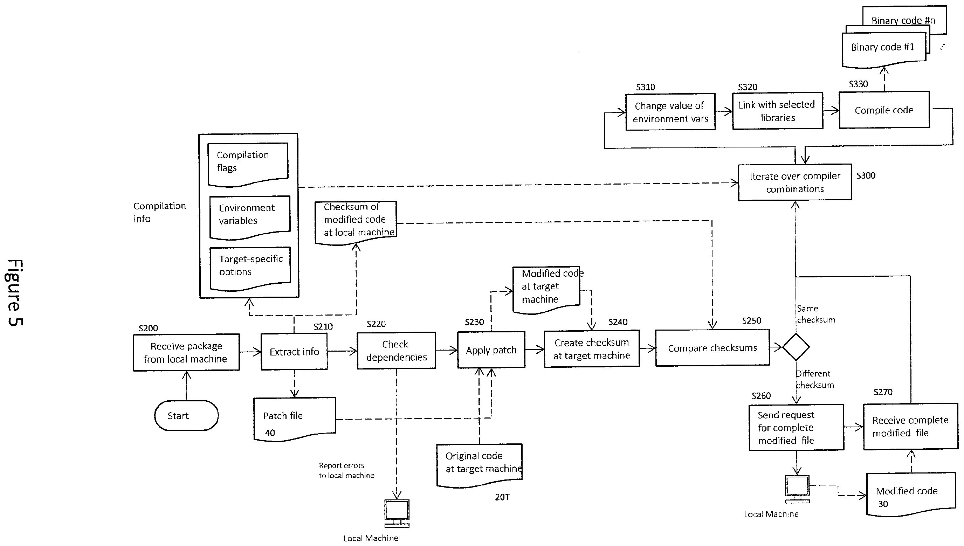

Figure 5 describes the process followed by each one of the target machines after receiving the package sent by the local machine in S200. With the information extracted from the package in S210, the system checks (S220) if the dependencies regarding the compiler options are satisfied, i.e. the selected compiler is installed in the machine, and the environment and compiler flags are valid for the compiler selected. Afterwards, the patch file with the changes made at the local machine is applied to the original code at the target machine in S230, generating a version of the modified code at the target machine. This version is compared in S250, using its checksum made in S240. If the checksums differ, the target machine sends a request in S260 for the complete modified file to the local machine, receiving the complete file in S270.

In any case, the process continues by compiling the modified code following the different combinations of compiler options (previously changing the environment appropriately), which may result in the creation of multiple binary or executable codes.

The iteration for each set of options in S300 is as follows. Firstly the value of the environment variables is changed as necessary in S310 to reflect the current options. Then the link to the selected libraries is made in S320 and the code is compiled in S330 with the modified code at the local machine.

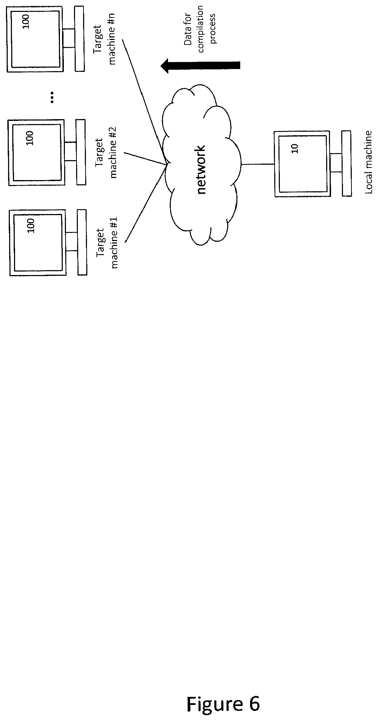

Figure 6 depicts the architecture of the system, in which a local machine communicates with the rest of target machines via a network. This network could be local, in which case all the machines would be located close together (perhaps in an intranet), or wide, with the machines being far from each other (for example, connected over the internet).

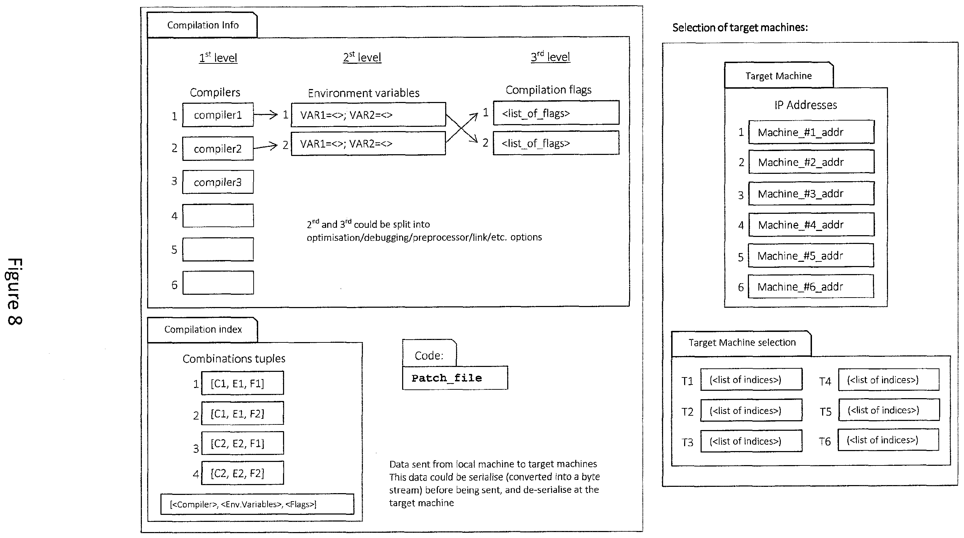

Figure 7 describes the process by which the system automatically creates the different combinations of compiler options, given the selection of compiler; environment variables; and compilation flags (including target-specific options) by the user. The system inputs this information and populates the 3 different levels in which the compiler options are described layer by layer in S400, S410 and S420. The layers are also shown in Figure 8. Thereafter, the system checks if the options set are compatible with each compiler, removing those which are not valid in S430. Later, the system iterates over all options and creates the different tuples in S440 as seen in Figure 8. Finally, the system adds the patch file and the checksum of the modified code to the packages (S450) that will be sent to the different target machines, as described in Figure 8 and creates a separate package for each target machine in S460.

Figure 8 depicts how the different combinations of compiler information and their allocation to the different target machines are described. First, the compilation information is described using three levels of detail: compilers, environment variables, and compilation flags, which could also include target-specific options. The term "target-specific options" refers to possible optimisations that only possible for certain architectures. For example, with an Intel compiler, it is possible to use the flag "-x<option>", which tells the compiler to generate specific vectorization instructions, e.g. "-xAVX", "-xSSE2", etc. With a gcc compiler it is also possible to set such special options, as described in https://gcc.gnu.org/onlinedocs/gcc-7.1.0/gcc/Submodel-Options.html#Submodel-Options. Then, the different combinations of the compiler options are described by a list of tuples, having as many combinations as the user decides to execute. This information, together with the patch file, is wrapped into a package that is sent to the target machines. This package may be serialised at the local machine, to later be de-serialised at each target machine.

How the package is created depends on which machines it is sent to. The information is encoded by a list with as many elements as target machines, in which each element contains a list of the combinations that have to be sent to a target machine. These combinations are identified by their index in the list of tuples previously described. With this information, only those combinations selected for a specific target machine (identified by its IP address) are sent to that machine.

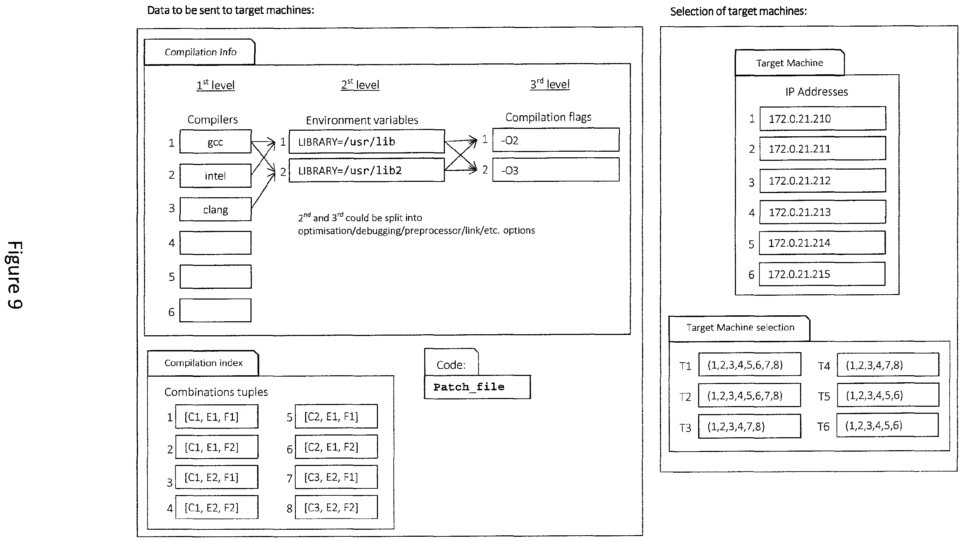

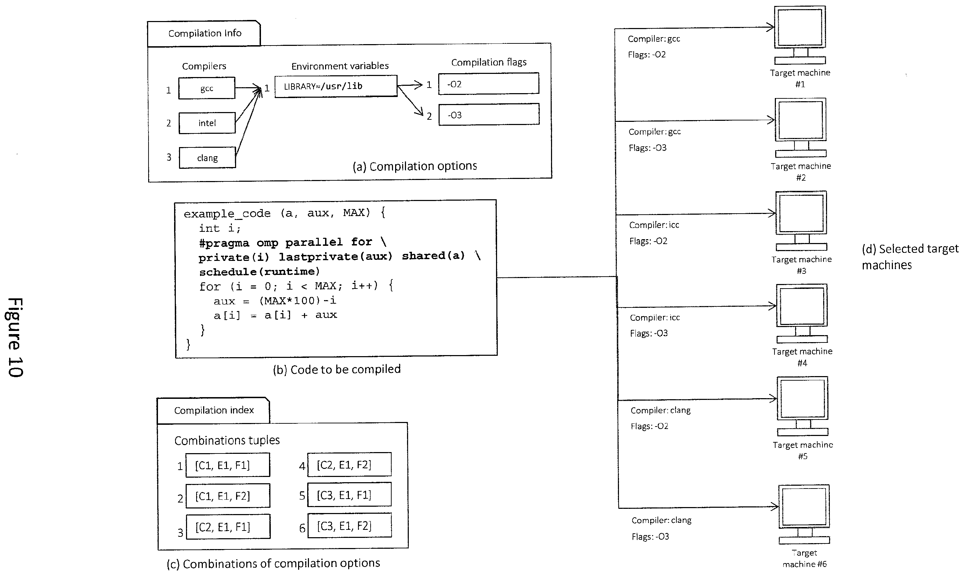

Figure 9 and Figure 10 show an example of how an embodiment may be used. Figure 9 contains an example of some of the combinations of compiler options that a user can set. In this case, the user decides to use three compilers (gcc, intel, and clang), which are linked with different libraries (specified by the environment variables), and compilation flags. These combinations are defined by a list of tuples, depending on the list of target machines, each of which have a list of combinations of compiler options. These combinations are identified by their index in the list of tuples previously described. With this information, only those combinations selected for a specific target machine (identified by its IP address) are sent to that machine. Figure 10 shows an specific example in which different compiler options have been sent to different target machines, triggering the compilation and generation of different binary files.

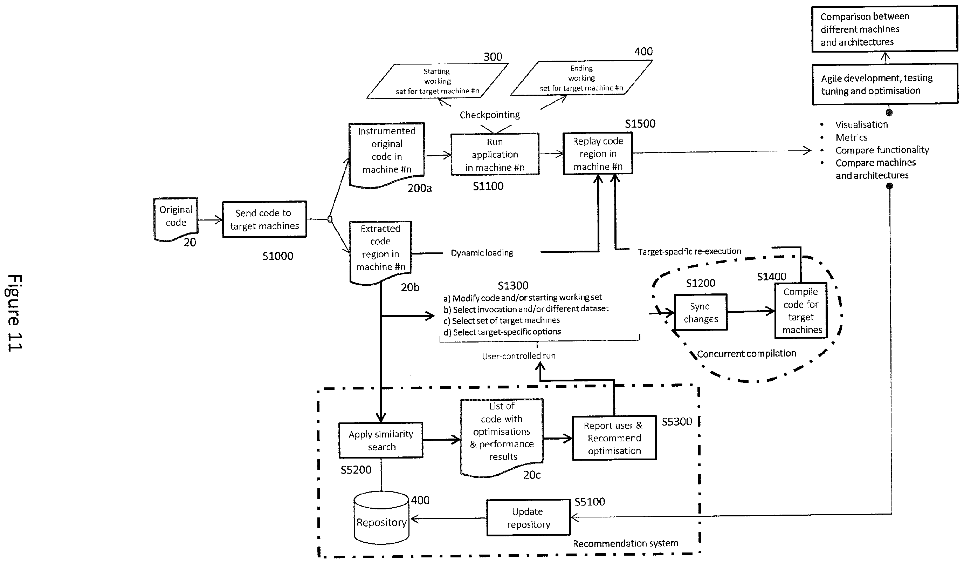

Figure 11 is a block diagram of a code modification process described in European patent application with agent ref: P130588EP00, entitled "A Computer-Implemented Method and System for Comparing the Results on a Plurality of Target Machines of Modification of a Region of Original Code", which is filed in parallel herewith, and incorporated by reference. The method extracts pieces of code (or code regions) on target machines using a compiler directive added as an annotation at a local machine, and modifies the extracted code at the target machines remotely using the local machine. The code modification may be one recommended to the user (or the recommendation may be automatically adopted).

In this code modification process, given an original software code annotated at the local machine with a compiler directive to extract a region of code, one embodiment starts with the distribution of a copy of this code to every target machine in which the code will be tested. Then, at each target machine (and potentially also at the local machine from which the whole process is initiated), this software code is compiled, the compiler directive allowing extraction of the piece/region of code to be modified. Following the recommendation as detailed later herein, the user at the local machine may apply several modifications to the code. Then, the embodiment may allow for the compilation according to an embodiment and the re-execution of that particular piece of code at every target machine, transferring the modifications and effectively triggering a specific compilation for each one of them with multiple compiler options as previously described.

At every target machine, the state of the program before and after the execution of each invocation of the selected code region (working sets) is captured, which allows the re-execution of each particular invocation, considering the differences that its execution could have at each machine (for example, if the execution flow depends on the architecture underneath). As part of this method, these states may be interactively modified, before re-executing the code, from the local machine, independently of these states being local or remote.

In Figure 11, which is a functional diagram of a code modification process spread across different target machines, original code 20 is sent to the target machines in step S1000. Compilation divides the code into instrumented original code 20a and extracted code 20b. Machine #n is shown to indicate that there are a number of different target machines. The application is executed or (or run which is used as a synonym for executed in this document) in a capture execution in step S1100 with checkpointing to allow the provision of a starting working set 300 for that target machine and an ending working set 400 for that machine.

In order to "replay" the extracted code region on the machine in step S1500 the extracted code is dynamically loaded into the instrumented code. This takes place both in the first checkpointing capture execution and in all subsequent executions for example, in a user controlled run as shown in step S1300 with options a) to d).

A recommendation is used to select one or more options to modify the code. Following modification and synchronisation of the changes in S1200 (for instance by sending a patch file), the extracted code must be re-compiled in step S1400, (in remote concurrent compilation) before replaying in step S1500. These two steps take the form of the remote compilation described herein. Results across the different machines may be visualised, metrics may be produced, functionality may be compared and this will allow comparison of a different machines and architectures as necessary. These outcomes of the method may permit agile development testing, tuning and optimisation and allow comparison of different machines and architectures.

Turning specifically to the recommendation system shown surrounded by a dashed line, a search for similar code to the extracted code 20b is used in S5200 to look in repository 400 of codes 20c in which each entity includes an original code and a temporal sequence of code versions with modifications from the previous version and their performance results. The similarity search gives a list of entities which are similar to the extracted code (usually based on the original code in the entity). Comparison of the performance results of the various code versions in the similar entities allows generation of a recommendation in S5300. This allows a report to the user of the recommendation for use in selecting any of options a) to d). The repository may be updated in step S5100 using the results of the method.

Looking at the compilation phase in more detail, the code changes in the code (for example using a patch file of the modification) and other parameters (such as choice of compiler) are synchronised to the target machines in step S1200 and the modified code is compiled at the target machines in step S1400 using the combinations of compiler parameters sent from the local machine. Since different combinations of parameter options are sent to a single target machine, they may be used to populate the repository with both the modified code version (of the extracted code) and its various implementations, along with their results.

There may also be different execution-time options for each combination, which may be executed separately, so that information and performance results for different execution-time parameters can also be stored in the repository.

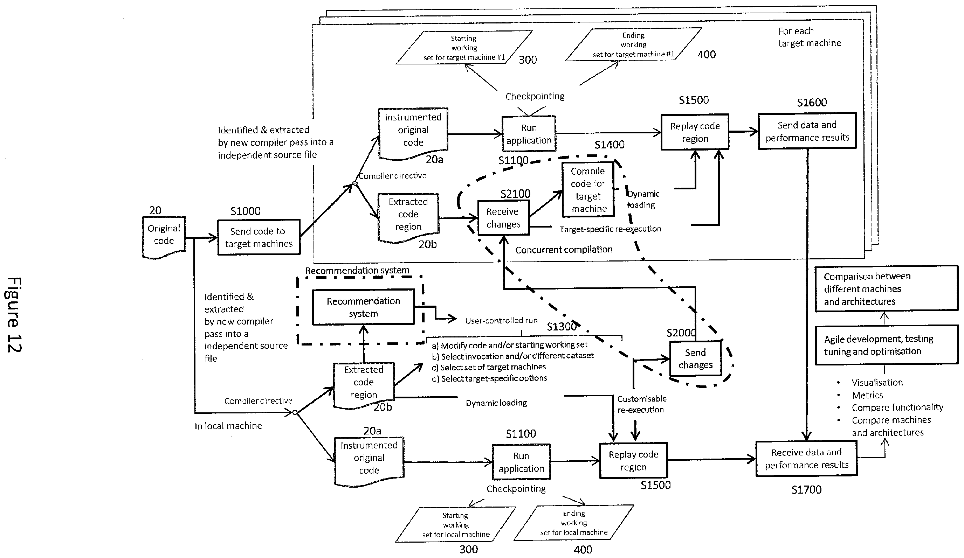

Figure 12 is a flow chart showing processes in the system of Figure 11 with separation of processes on the local machine and processes on the target machines. The figure is similar to Figure 11 and therefore the description of this figure is limited to the differences between the two figures. In particular, Figure 11 shows the compilation and execution process taking place at the local machine (in the lower half of the figure) as well at the target machines (in the upper half), the sending and receipt of the data and performance results at the local machine in steps S1600 and S1700 and the details of concurrent compilation. In concurrent compilation, changes to the code are sent (with compilation and other execution-time parameters as necessary) in S2000 from the local machine and received at the target machines in S2100 (replacing the change synchronisation S1200 in Figure 11). This allows compilation to take place in S1400, before dynamic loading into the code replay. Different combinations of execution-time parameters for the modified codes are sent from the local machine, allowing compilation and execution of the modified code with each combination. The results (including performance results) of execution of each combination may be stored in repository 400 of the recommendations system described below. Hence embodiments include execution of each combination at the target machines as well as the storage in the repository and use of the repository to provide recommendations for code modification as described above.

Figure 13 is a block diagram of a computing device, such as a data storage server, which embodies the present invention, and which may be used to implement a method of an embodiment of remote compilation, either as the target machine or as the local machine as shown in Figures 3a to 3c. The computing device comprises a processor 993, and memory, 994. The computing device also includes a network interface 997 for communication with other computing devices, for example with the target machines if it is acting as the local machines or with the local machine if it is acting as one of the target machines.

For example, an embodiment may be composed of a network of such computing devices (comprising the local machine and all possible target machines). Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).
The processor 993 is configured to control the computing device and execute processing operations, for example executing code stored in the memory to implement the various different functions of the processor 14, 140 described here and in the claims. Processor 993 may also be programmed to act as the compiler 120. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device, for example code, as shown in Figure 10 and the compiler information and index, as well as target machine selection shown in Figure 9 and may also display a cursor and dialog boxes and screens enabling interaction between a user and the programs and data stored on the computing device. The input mechanisms 996 may enable a user to input data and instructions to the computing device.

The network interface (network I/F) 997 may correspond to local network interface 16 or target network interface 160 and may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention such as those shown in Figures 2, 4, 5, 7, 11 or 12 or claimed in the claims may be carried out on a computing device such as that illustrated in Figure 13. Such a computing device need not have every component illustrated in Figure 13, and may be composed of a subset of those components. A method embodying the present invention may be carried out by a single computing device in communication with one or more data storage servers via a network. The computing device may be a data storage itself storing code and compilation parameters and potentially execution time parameters.

A method embodying the present invention may be carried out by a plurality of computing devices operating in cooperation with one another. One or more of the plurality of computing devices may be a data storage server storing at least a portion of the code and compilation parameters and potentially execution time parameters

Embodiments may be applied to any field is which there is a use of source code. Embodiments may thus be used not only with HPC applications/programs, but also with applications that belong to any other field, since the mechanism described may be applied to any type of software.

Another potential application is use on a cloud environment, offering functionalities as a service (FaaS). This way, users may access the system described remotely, without having to configure anything locally. The local machine described may act as a gateway in this case, providing access to the rest of the machines (target machines) that reside on the cloud.

Embodiments may allow the compilation of source code with different options (compiler selection, compilation flags, and environment variables) for different target machines, which could also consist of different architectures, simplifying the process, and making it automatic.

The user may easily generate different binaries for different target machines for its execution at those machines. Therefore, the process becomes seamless since the code is actually compiled remotely, although the process is controlled from the local machine. Furthermore, in the case of targeting multiple machines, the generation of the different binaries may be carried out concurrently, since there are no dependencies among target machines.

Moreover, the compilation of a code for a certain target machine under different compiler options, and the subsequent generation of different executable codes may be handled automatically, instead of requiring these options to be changed manually for each compilation.

As a result, users of embodiments may accelerate especially their testing and tuning activities, since they may easily measure the impact of their activities under different machines, architectures or compilers. In the process, programmers may gain not only a better understanding of their code behaviour, but they may also gather information on the particularities of each architecture, machine, and compiler.

Additionally, embodiments may cut costs: The resources needed at the local machine are minimal, since the main computational costs reside on the target machines. The local machine does not need to have cross-compilers and all the libraries required for each target machine installed, effectively reducing the requirements for the local machine to be a simple terminal.

Embodiments may provide:
- A method and system that take changes to a certain source code, and propagates them to a selection of target machines, which automatically apply these changes and compile the resulting codes using the multiple compilation options generated at the local machine.
- A method and system to automatically create and distribute multiple compilation options, including the compiler selection, different compilation flags and environment variables, to several target machines, which receive different combinations of these compilation options.
- A method and system to describe and create different combinations of compilation options, and their allocation to different target machines.
- A method and system by which these different compilation options are used to generate as many binary files as required.

### Glossary

**Architecture:** the underlying structure of the machine, which may encompass both hardware architecture (all the parts of the machine that are not software, including processor, memory, connecting buses, and peripherals) and software architecture (the lowest levels of the software stack, including the operating system (OS).

**Dataset:** the collection of data, or related sets of information, that is feed into a program. Depending of the dataset, a certain program will behave in one way or another.

**HPC:** High Performance Computing

**Target Machine:** Machine (computer) for which the code is compiled.

**Compiler:** A computer program (or a set of programs) that transforms source code written in a programming language (the source language) into another computer language (the target language). The latter is often in binary form, and therefore, executable at the target machine.

**Environment variables:** A set of dynamic named values that can affect the way running processes behave on a computer. These variables can affect the compilation process, and therefore, the resulting binary file generated.

**Compilation flags:** Parameters for the compilation process.

**Local Machine:** Machine where the programmer/user is located.

## Claims

1. A computer-implemented method of compiling a modified source code at a plurality of target machines connected to a local machine over a network, the method comprising:
a local machine using compiler information for each target machine to create combinations of compiler options for each target machine;
the local machine sending a code modification to each target machine, along with the compiler option combinations for that target machine; and
each target machine receiving the code modification and compiler option combinations and compiling the modified code with each of the compiler option combinations to provide as many executable files as combinations.

2. A method according to claim 1, further comprising:
the local machine sending original code to each of the target machines;
the local machine sending the code modification as a patch file describing the modification; and
each target machine generating modified code automatically by applying the patch to the original code.

3. A method according to claim 2, further comprising:
the local machine generating a local machine checksum of the modified source code and sending the local machine checksum to the target machines;
each target machine generating a target machine checksum of the modified code by applying the patch to the original code to generate the modified code and then comparing the target machine checksum with the local machine checksum; and
when the local machine checksum and a target machine checksum differ, the target machine sending a request for the complete modified source code to the local machine.

4. A method according to any of the preceding claims, wherein:
the compiler options include any of: compiler selection, compilation flags and compiler environment variables.

5. A method according to any of the preceding claims, wherein:
the local machine populates three levels of compiler options, formed by compilers, compilation flags and environment variables, removes any invalid options, and then creates compiler option combinations in the form of tuples with an entry for each level, each tuple including a compiler, a compilation flag and one or more environment variables, and optionally wherein:
the tuples are stored in an indexed list and only combinations selected for a target machine are sent to that target machine.

6. A method according to any of the preceding claims, wherein:
one or more of the target machines have a different architecture from the local machine.

7. A method according to any of the preceding claims, wherein:
the compilation at each target machine is concurrent.

8. A computer-implemented method in a local machine triggering compilation of a modified source code at a plurality of target machines connected to the local machine over a network, comprising:
using compiler information for each target machine to create combinations of compiler options for each target machine; and
sending a code modification to each target machine, along with the compiler option combinations for that target machine.

9. A computer-implemented method in a target machine connected to a local machine over a network of compiling a modified source code, comprising:
sending compiler information to the local machine, allowing the local machine to create combinations of compiler options for the target machine;
receiving a code modification from the local machine, along with the compiler option combinations for the target machine; and
compiling the modified code with each of the compiler option combinations to provide as many executable files as combinations.

10. A local machine to trigger compilation of a modified source code at a plurality of target machines connected to the local machine over a network, the local machine comprising a local processor and a local network interface; wherein:
the local processor is to use compiler information for each target machine to create combinations of compiler options for each target machine; and
the local network interface is to send a code modification to each target machine, along with the compiler option combinations for that target machine.

11. A target machine connected to a local machine over a network, the target machine to compile a modified source code and comprising a compiler and a target network interface; wherein:
the target network interface is to send compiler information to the local machine, allowing the local machine to create combinations of compiler options for the target machine;
the target network interface is to receive a code modification from the local machine, along with the compiler option combinations for the target machine; and
the compiler is to compile the modified code with each of the compiler option combinations to provide as many executable files as combinations.

12. A computer system comprising a local machine according to claim 10 and a plurality of target machines according to claim 11.

13. A computer-implemented method at a local machine for comparing the results on a plurality of target machines connected to the local machine over a network of modification of a region of original code, the method comprising:
annotating a region of original code in a program for extraction with a compiler directive;
distributing the program to the target machines; allowing compilation of code including the original code and the compiler directive, and generation of executable code in the form of extracted code and instrumented code at each target machine, wherein the compiler directive causes the annotated region of the original code to be extracted, stored in a separate file, and linked to a function call at a position in the original code from which the extracted region was extracted;
modifying the extracted code and sending the modification to the target machines;
triggering re-compilation of the modified extracted code at each target machine according to claim 8, to generate new executable versions of the extracted code in each target machine for dynamic loading into the instrumented program;
receiving from each target machine the results of the target machine executing the instrumented program and dynamically loading and executing the new executable versions of the extracted code; and
displaying the results of the target machines to allow determination of the effects of the modification on the results from the different target machines.

14. A computer-implemented method on a target machine connected to a local machine over a network to allow comparison of the results on the target machine of modification of a region of original code with the results of other target machines, the method comprising:
receiving a program from the local machine, including a region of original code in the program annotated for extraction with a compiler directive;
compiling code including the original code and the compiler directive, and generating executable code in the form of extracted code and instrumented code, wherein the compiler directive causes the annotated region of the original code to be extracted, stored in a separate file, and linked to a function call at a position in the original code from which the extracted region was extracted;
receiving a modification of the extracted code and re-compiling the modified extracted code according to claim 9 and generating new executable versions of the extracted code for dynamic loading into the instrumented program;
executing the instrumented program and dynamically loading and executing the new executable versions of the extracted code and sending the results to the local machine for comparison.

15. A computer program which when executed on a computer carries out a method according to any of the preceding method claims.

16. A target machine to allow comparison of the results on the target machine of modification of a region of original code with the results of other target machines, wherein:
the target machine comprises a compiler and a target network interface controlled by a target processor, wherein:
the target network interface is to send compiler information to a local machine, allowing the local machine to create combinations of compiler options for the target machine;
the target network interface is to receive a program, including annotation by the user of a region of original code in the program for extraction with a compiler directive;
the compiler is to compile code including the original code and the compiler directive, to generate executable code in the form of extracted code and instrumented code, to use the compiler directive to cause the annotated region of the original code to be extracted, stored in a separate file, and linked to a function call at a position in the original code from which the extracted region was extracted;
the target network interface is to receive a modification of the extracted code from the local machine along with the compiler option combinations for the target machine;
the compiler is to re-compile the modified extracted code when triggered by receipt of the modified extracted code with each of the compiler option combinations to generate as many executable files as for dynamic loading into the instrumented program;
the target processor is to execute the instrumented program and to dynamically load and execute the new executable versions of the extracted code; and
the target network interface is to send the results to the local machine for comparison.
